**Europäisches Patentamt**

**European Patent Office**

**Office européen des brevets**

(19)

(11) Veröffentlichungsnummer : **0 099 904**
**B1**

(12) # EUROPÄISCHE PATENTSCHRIFT

(45) Veröffentlichungstag der Patentschrift :
21.11.85

(21) Anmeldenummer : 83900419.9

(22) Anmeldetag : 25.01.83

(86) Internationale Anmeldenummer :
PCT/EP 83/00017

(87) Internationale Veröffentlichungsnummer :
WO/8302592 (04.08.83 Gazette 83/18)

(51) Int. Cl.⁴ : **B 60 R 25/02**

(54) **SICHERUNGSVORRICHTUNG MIT HYDRAULISCHER LENKUNGSBLOCKIERUNG FÜR KRAFTFAHRZEUGE.**

Verbunden mit 83100634.1/0085383 (europäische Anmeldenummer/Veröffentlichungsnummer) durch Entscheidung vom 20.03.85.

(30) Priorität : 28.01.82 FR 8201310

(43) Veröffentlichungstag der Anmeldung :
08.02.84 Patentblatt 84/06

(45) Bekanntmachung des Hinweises auf die Patenterteilung : 21.11.85 Patentblatt 85/47

(84) Benannte Vertragsstaaten :
DE GB IT

(56) Entgegenhaltungen :
DE-A- 2 427 258
DE-A- 2 818 703
FR-A-   745 403
US-A- 1 790 427

(73) Patentinhaber : NEIMAN S.A.
39, Avenue Marceau
F-92400 Courbevoie (FR)

(72) Erfinder : LIPSCHÜTZ, Paul
12, rue Maurice Berteaux
F-78290 Croissy (FR)

(74) Vertreter : Patentanwaltsbüro Cohausz & Florack
Schumannstrasse 97
D-4000 Düsseldorf 1 (DE)

**Beschreibung**

Die Erfindung betrifft eine Sicherungsvorrichtung für Kraftfahrzeuge, die die Lenkung blockiert.

Lenkradschlösser, die die Lenkung blockieren, sind die am häufigsten verwendeten und wirksamsten Vorrichtungen, um die unbefugte Benutzung von Kraftfahrzeugen zu verhindern. Die bekannten Lenkradschlösser sind mechanische Vorrichtungen, die an der Lenksäule befestigt sind und mechanisch die Lenkradwelle oder das Lenkrad feststellen.

Diese bekannten Vorrichtungen haben trotz einer gewissen Wirksamkeit mehrere Nachteile :

Sie rasten nicht selbsttätig ein ; vielmehr ist eine Drehung des Lenkrades erforderlich, um die Lenkung zu blockieren.

Die Aufhebung der Lenkungsblockierung erfordert im allgemeinen einen erheblichen Kraftaufwand.

Das Lenkradschloß ist leicht zugänglich, wenn das Fahrzeug offen ist.

Die Anordnung des Lenkradschlosses an der Lenksäule ist im Hinblick auf den Komfort, die Sicherheit, das Aussehen und gesetzliche Vorschriften ungünstig.

Der Erfindung liegt die Aufgabe zugrunde, diese Nachteile bekannter Lenkradschlösser zu beseitigen.

Erfindungsgemäß wird diese Aufgabe bei einer Sicherungsvorrichtung der eingangs genannten Art dadurch gelöst, daß sie eine Vorrichtung zum Verschließen der Einlaßöffnungen eines Hydraulikzylinders umfaßt, dessen Kolbenstange mit einem Bauteil der Lenkung verbunden ist.

Falls das Fahrzeug mit einer hydraulischen Lenkhilfe ausgerüstet ist, ist dessen Zylinder der erwähnte Hydraulikzylinder.

An Hand der Zeichnungen wird die Erfindung näher erläutert. Es zeigen :

Figur 1 eine schematische Darstellung eines Ausführungsbeispiels der Sicherungsvorrichtung, angewandt bei einem Fahrzeug mit hydraulischer Lenkhilfe ;

Figuren 2 bis 4 schematische Darstellungen verschiedener Betätigungsvorrichtungen für die in Figur 1 dargestellte Sicherungsvorrichtung.

Die hydraulishe Lenkhilfe des Fahrzeugs besteht aus einem Hydraulikzylinder 1, dessen Kolbenstange 2 eine Verzahnung aufweist, die mit einem Ritzel 3 zusammenwirkt. Das Ritzel 3 steuert auch einen Verteiler 4, der mit einer Pumpe 5 und einem Vorratsbehälter 6 verbunden ist. Die Enden der Kolbenstange 2 wirken mit den Gelenken 7 der Lenkung zusammen. Der Kolben 25 des Hydraulikzylinders 1 teilt diesen in zwei Räume, die durch die linke Einlaßöffnung 19 und die rechte Einlaßöffnung 20 mit zwei Ausgängen des Verteilers 4 verbunden sind.

Erfindungsgemäß können die Öffnungen 19 und 20 verschlossen werden, wodurch der Kolben 25 und die Kolbenstange 2 arretiert und damit die Gelenke 7 blockiert werden. Falls das Fahrzeug nicht mit einer hydraulischen Lenkhilfe ausgerüstet ist, kann man eine einfache hydraulische Vorrichtungen vorsehen, die aus einem Hydraulikzylinder 1 besteht, dessen Kolbenstange 2 direkt mit der Lenkung verbunden ist.

Bei dem beschriebenen Ausführungsbeispiel werden die Einlaßöffnungen 19, 20 hydraulisch verschlossen. Hierzu enthält die Vorrichtung einen Schieber 8 mit drei Kolben 9, 10, 11, die auf einer gemeinsamen Kolbenstange 16 montiert und mit einer Mutter 12 verbunden sind. In der in der Zeichnung dargestellten Betriebsstellung verschließen die Kolben 9 und 10 die jeweiligen Öffnungen 19 und 20 nicht, und der Hydraulikzylinder 1 wird normal durch die Öffnungen 21 und 23 gespeist. Der Kolben 11 ist aus Sicherheitsgründen dazu bestimmt, entweder die Kraftstoffzufuhr zum Motor zu unterbrechen oder den Zündstromkreis derart zu öffnen oder zu schließen, daß die Lenkung nicht blockiert werden kann, solange der Motor läuft.

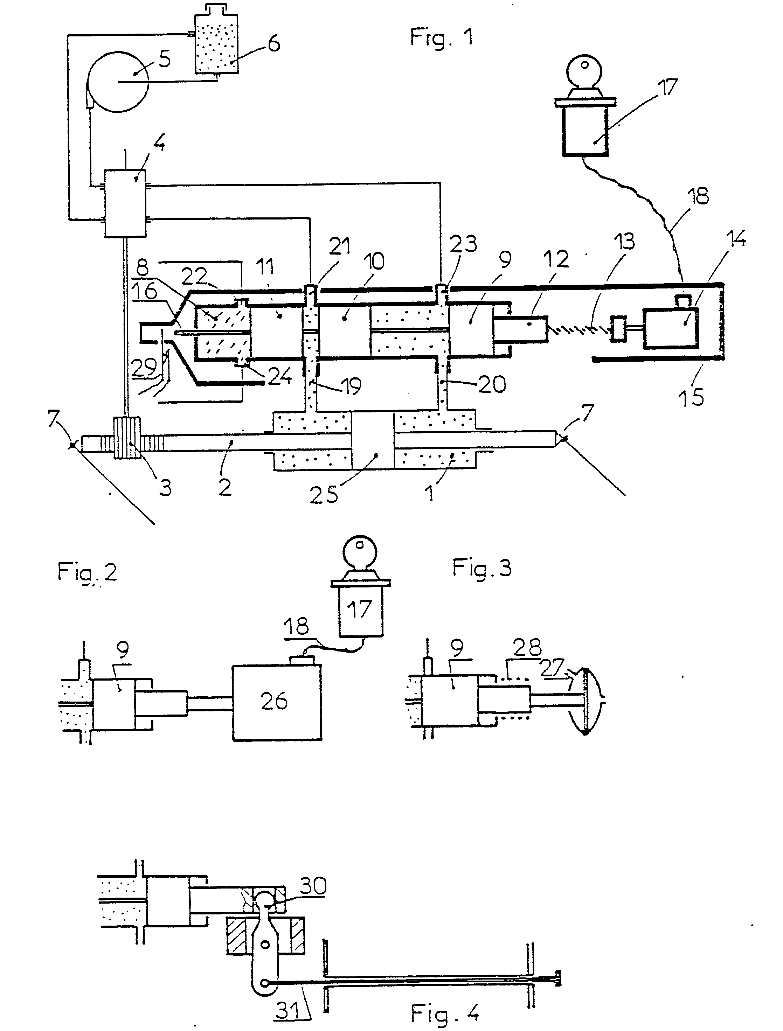

Die Mutter 12 wirkt mit einer Spindel 13 zusammen, die von einem Elektromotor 14 angetrieben wird ; das Ganze ist in einem Gehäuse 15 untergebracht. Das Ende der Kolbenstange 16 hält das Gehäuse 15 in Ruhestellung. Der Motor 14 wird von einem elektrischen Schlüsselschalter 17 ein- und ausgeschaltet, mit dem er durch ein Panzerkabel 18 verbunden ist. Wenn der Schalter 17 in AUS-Stellung gedreht und der Schlüssel abgezogen wird, wird der Motor 14 eingeschaltet und erzeugt eine Linearbewegung der Kolben 9, 10, 11 nach links (in der Zeichnung), wodurch die Speisung des Hydraulikzylinders 1, die Kraftstoffzufuhr in den Leitungen 22, 24 und der Zündstromkreis 29 unterbrochen wird. Das Fahrzeug ist nun nicht mehr betriebsfähig, seine Lenkung in der eingenommenen Stellung blockiert. Beim Wiedereinführen des Schlüssels und Drehen des Schlosses in Betriebsstellung wird der Motor 14 erneut eingeschaltet, dreht sich jetzt in umgekehrter Richtung und bewegt die Kolben 9, 10, 11 in die in Figur 1 dargestellte Stellung.

Bei der Ausführungsform nach Figur 2 wird der Schieber 8 von einem Elektromagneten 26 gesteuert, der seinerseits von dem Schalter 17 betätigt wird.

Bei der Ausführungsform nach Figur 3 wird der Schieber 8 von einer Unterdruckvorrichtung 27 gegen den Widerstand einer Feder 28 bewegt.

Bei der Ausführungsform nach Figur 4 wird der Schieber 8 mechanisch von einem Hebel 30 gesteuert, der von einem Seil 31 oder einem Gestänge bewegt wird.

Der Verschluß der Einlaßöffnungen 19, 20 des Hydraulikzylinders kann direkt durch Magnetventile bewirkt werden. Außer oder anstelle der Beeinflussung der Kraftstoffleitung 22, 24 kann die Sicherungsvorrichtung auch eine Einspritzpumpe und/oder einen elektrischen Stromkreis des Fahrzeugs steuern.

Die Sicherungsvorrichtung kann durch jedes geeigneten Mittel, wie den beschriebenen Schlüsselschalter, eine elektronische Zugangsvorrichtung, eine elektronische Fernsteuerung und dergleichen, betätigt werden.

**Patentansprüche**

1. Sicherungsvorrichtung mit Lenkungsblockierung für Kraftfahrzeuge, dadurch gekennzeichnet, daß sie eine Vorrichtung (9, 10) zum Verschließen der Ein- bzw. Auslaßöffnungen (19, 20) eines Hydraulikzylinders (1) umfaßt, dessen Kolbenstange (2) mit einem Bauteil (7) der Lenkung verbunden ist.

2. Vorrichtung nach Anspruch 1, dadurch gekennzeichnet, daß der Hydraulikzylinder (1) Teil einer Lenkhilfe des Fahrzeug ist.

3. Vorrichtung nach Anspruch 1 oder 2, dadurch gekennzeichnet, daß die Verschließvorrichtung ein Hydraulikschieber (8) ist.

4. Vorrichtung nach nach Anspruch 1 oder 2, dadurch gekennzeichnet, daß die Verschließvorrichtung aus Magnetventilen besteht.

5. Vorrichtung nach Anspruch 3, dadurch gekennzeichnet, daß der Schieber (8) durch eine Spindel (13) betätigbar ist, die von einem Elektromotor (14) angetrieben wird.

6. Vorrichtung nach Anspruch 5, dadurch gekennzeichnet, daß der Elektromotor (14) mit Hilfe eines Schlüsselschalters (17) über ein Panzerkabel (18) betätigbar ist.

7. Vorrichtung nach Anspruch 5, dadurch gekennzeichnet, daß der Elektromotor (15) durch eine elektronische Zugangsvorrichtung betätigbar ist.

8. Vorrichtung nach Anspruch 5, dadurch gekennzeichnet, daß der Elektromotor (14) mit Hilfe einer elektronischen Fernsteuerung betätigbar ist.

9. Vorrichtung nach Anspruch 3, dadurch gekennzeichnet, daß der Schieber (8) durch einen Elektromagneten (26) betätigbar ist.

10. Vorrichtung nach Anspruch 3, dadurch gekennzeichnet, daß der Schieber (8) durch eine Unterdruckvorrichtung (28) betätigbar ist.

11. Vorrichtung nach Anspruch 3, dadurch gekennzeichnet, daß der Schieber (8) durch eine mechanische Vorrichtung (30, 31) betätigbar ist.

**Claims**

1. Securing device with steering locking for motor vehicles, characterised in that it comprises a device (9, 10) for closing the inlet and/or outlet openings (19, 20) of a hydraulic cylinder (1) the piston rod (2) of which is connected with a component (7) of the steering.

2. Device according to Claim 1, characterised in that the hydraulic cylinder (1) is part of a steering assistance system of the vehicle.

3. Device according to Claim 1 or 2, characterised in that the closure device is a hydraulic slide valve (8).

4. Device according to Claim 1 or 2, characterised in that the closure device consists of magnetic valves.

5. Device according to Claim 3, characterised in that the slide valve (8) is actuatable by a spindle (13) which is driven by an electric motor (14).

6. Device according to Claim 5, characterised in that the electric motor (14) is actuatable through an armoured cable (18) with the aid of a key switch (17).

7. Device according to Claim 5, characterised in that the electric motor (14) is actuatable by an electronic access device.

8. Device according to Claim 5, characterised in that the electric motor (14) is actuatable with the aid of an electronic remote control.

9. Device according to Claim 3, characterised in that the slide valve (8) is actuatable by an electromagnet (26).

10. Device according to Claim 3, characterised in that the slide valve (8) is actuatable by a suction device (28).

11. Device according to Claim 3, characterised in that the slide valve (8) is actuatable by a mechanical device (30, 31).

**Revendications**

1. Dispositif de sécurité avec blocage de la direction pour véhicule automobile, caractérisé par le fait qu'il comprend un dispositif d'obturation (9, 10) des ouvertures d'alimentation ou d'évacuation (19, 20) d'un vérin hydraulique (1) dont la tige (2) est reliée à un organe (7) de la direction.

2. Dispositif selon la revendication 1, caractérisé en ce que le vérin hydraulique (1) fait partie d'un dispositif d'assistance hydraulique de direction du véhicule.

3. Dispositif selon l'une des revendications 1 et 2, caractérisé en ce que le dispositif d'obturation est un tiroir hydraulique (8).

4. Dispositif selon l'une des revendications 1 et 2, caractérisé en ce que le dispositif d'obturation comprend des électrovannes.

5. Dispositif selon la revendication 3, caractérisé en ce que le tiroir (8) est commandé par une vis sans fin (13) qui est actionnée par un moteur électrique (14).

6. Dispositif selon la revendication 5, caractérisé en ce que le moteur électrique (14) est commandé par un contacteur à clé (17) par l'intermédiaire d'un câble blindé (18).

7. Dispositif selon la revendication 5, caractérisé en ce que le moteur électrique (14) est commandé par un dispositif d'accès électronique.

8. Dispositif selon la revendication 5, caractérisé en ce que le moteur électrique (14) est commandé par un dispositif électronique de télécommande.

9. Dispositif selon la revendication 3, caractérisé en ce que le tiroir (8) est commandé par un électroaimant (26).

10. Dispositif selon la revendication 3, caractérisé en ce que le tiroir (8) est commandé par un dispositif à dépression (27).

11. Dispositif selon la revendication 3, caractérisé en ce que le tiroir (8) est commandé par un dispositif mécanique (30, 31).

0 099 904

Fig. 1

Fig. 2

Fig. 3

Fig. 4

1